# EUROPÄISCHE PATENTANMELDUNG

(11) **EP 1 900 655 A2**
(43) Veröffentlichungstag der Anmeldung: **19.03.2008**
(21) Anmeldenummer: 07017696.1
(22) Anmeldetag: 11.09.2007
(51) Int. Cl.: B65G 11/20

(54) **Schwerkraftschacht zur Übergabe von Stückgütern**

(30) Priorität: 15.09.2006 DE 102006045850
(71) Anmelder: Modicos Kommissioniersysteme GmbH, 73230 Kirchheim/Teck (DE)
(72) Erfinder: Lang, Tobias H., 72622 Nürtingen (DE); Döbler, Uli, 72574 Bad Urach - Seeburg (DE)
(74) Vertreter: Fürst, Siegfried

(57) **Zusammenfassung**

Vorrichtung zum Abwärtstransportieren von Waren/Stückgütern von einer ersten, oberen Transportebene (E1) zu einer zweiten, unteren Transportebene (E2) hin, mit einer Transportsäule (2), in der mittels einer Bremseinheit (11) die Transportgeschwindigkeit der transportierten Stückgüter durch gezielte Absorption der Bewegungsenergie wesentlich vermindert wird.

## Beschreibung

Die Erfindung betrifft eine Vorrichtung zum schonenden Abwärtstransport von unterschiedlich dimensionierten und geformten Stückgütern.

Derartige Vorrichtungen werden insbesondere beim Kommissionieren von Waren, beispielsweise von in Verpackungen wie Schachteln und Flaschen aufbewahrten Arzneimitteln, benötigt, wenn die Läger für die Waren eine erhebliche Erstreckung in vertikaler Richtung aufweisen, und - wie üblich - der Punkt, an dem die Waren übergeben werden, im unteren Höhenbereich der Läger liegt. In diesem Fall müssen die Waren nach der Entnahme aus dem Lagerfach eine zum Teil erhebliche Höhendifferenz von mehreren Metern nach unten bis zur Ebene der Übergabe überwinden. Gleiches gilt, wenn das Ende einer Förderstrecke für besagte Waren/Stückgüter und der Anfang der auf letztere folgenden Förderstrecke oder eine Ausgabestation in unterschiedlichen Höhenebenen angeordnet sind.
Hierfür werden bisher beispielsweise Aufzüge, etwa nach dem Paternoster-Prinzip, benutzt. Herstellung und Wartung derartiger Aufzüge sind jedoch relativ aufwendig, und auch die Ausfallwahrscheinlichkeit ist hoch.

Als einfachere Lösung werden auch schräge Rutschen benutzt. Um dabei einen großen Bedarf an Grundfläche zu vermeiden, sind diese Rutschen in der Regel als vertikal gerichtete Spirale ausgebildet. Nachteilig ist dabei, dass die Rutschgeschwindigkeit von der Masse und den Gleiteigenschaften der Ware abhängen. Da eine bestimmte Rutschgeschwindigkeit nicht überschritten werden soll, um keine Beschädigung oder Zerstörung der Ware zu riskieren, muss die Schräge der Rutsche und ihre Beschichtung nach den schwersten und gleitfähigsten Waren ausgerichtet sein. Dies hat zur Folge, dass besonders leichte und schlecht rutschende Waren unter Umständen auf der schrägen Ebene liegen bleiben oder zumindest unerwünscht langsam herabrutschen.

Zudem ist aus der DE 100 20 427 A1 eine Transportvorrichtung und ein Transportverfahren bekannt, bei denen zum Abtransportieren von Waren anstelle von Aufzügen oder schrägen Ebenen zum Herabrutschen etc. ein abwärts gerichteter Kanal vorgesehen ist, wobei dort die Rutschgeschwindigkeit der Waren durch gezielte Querschnittsveränderung des Kanals gesteuert wird, nämlich durch Veränderung des Konus-Winkels und/oder des Abstandes der Kanalwände zueinander. Nachteil dieser Lösung ist die nicht stetige Förderung der Waren. Ein erster Teilabschnitt der Kanalwand wird anfänglich so gestellt, dass im abwärts gerichteten Förderkanal kopfseitig ein Sammelraum gebildet ist, mit einer schiefen Ebene, damit die Waren sich in Richtung der einen Kanalwand anstauen. Erst wenn für das effektive Betreiben dieser Vorrichtung genügend Waren in diesem Warenraum angesammelt sind, erfolgt die besagte gezielte Querschnittsveränderung des Kanals, sodass die Waren schonend nach unten zur Ausgabeöffnung befördert werden.

Es ist daher die Aufgabe der vorliegenden Erfindung, eine diesbezügliche Vorrichtung zu schaffen, die trotz einfachem und wartungsarmem Aufbau Waren/Stückgüter, auch unterschiedlicher Gestalt und Masse, sicher und mit kalkulierbarem Zeitbedarf nach unten transportiert sowie bei Bedarf einen stetigen Transport erlaubt. Letzteres ist gerade bei Anlagen mit nachgeschalteter automatischer Übergabe/Zusammenstellung wichtig.

Diese Aufgabe wird durch eine Vorrichtung zur Übergabe von Stückgütern mit den Merkmalen des Anspruches 1 gelöst. Vorteilhafte Ausführungsformen der Vorrichtung ergeben sich aus den Merkmalen der jeweils nachgeordneten Unteransprüche.

Das Grundprinzip der neuen Vorrichtung für die Übergabe von Stückgütern mit Höhenausgleich beruht darauf, dass
eine spezielle Transportsäule, durch deren Innenraum hindurch die Stückgüter von einer ersten, oberen Transportebene zu einer zweiten, unteren Transportebene hin abwärts transportiert werden, vorgesehen ist, wobei in deren Innenraum zwischen einem im Kopfbereich der Transportsäule vorgesehenen Eingang und einem im Fußbereich der Transportsäule angeordneten Ausgang eine Bremseinheit vorgesehen ist, mit welcher die Transportgeschwindigkeit des zumindest mittels Schwerkraft fallenden Stückgutes wesentlich gesenkt wird. Somit ist ein schonendes Abwärts-Transportieren und eine behutsame Übergabe an die nachfolgende Transporteinheit bzw. Ausgabe-/ Entnahmestation gewährleistet. Zugleich garantiert diese Bremseinheit einen stetigen Transport von Stückgütern.

Mittels dieser Bremseinheit wird die Bewegungsenergie des hinabfallenden Stückgutes gezielt absorbiert, vorzugsweise in Teilphasen, sodass auf das abwärts transportierte Stückgut eine Bremskraft zumindest nicht ständig reibend angreift und der reibende Kontakt auf ein Minimales reduziert ist.

Nach einer Ausführungsvariante bilden zumindest Teile der Bremseinheit einen Bremsschacht, wobei selbiger zugleich der Fallschacht für den Abwärts-Transport der Stückgüter ist.
Bevorzugt umfasst die Bremseinheit wenigstens eine vordere, im Wesentlichen vertikal gerichtete, jedoch zum Ausgang hin bogenförmig geführte vordere Innenwand und eine im Wesentlichen vertikal und zu letzterer beabstandet angeordnete hintere Innenwand. Zumindest die hintere Innenwand und vorzugsweise auch die vordere Innenwand bestehen aus einem flexiblen Material.

Jedes auf der oberen Transportebene zu dem Eingang der Transportsäule hin beförderte Stückgut trifft zunächst ein erstes Mal an die pendelnd aufgehangene hintere Innenwand der Bremseinheit. Durch diese Berührung wird ein erstes Mal Bewegungsenergie dieses Stückgutes absorbiert und es fällt dann abwärts und gegen die gegenüberliegende vordere Innenwand der Bremseinheit, wobei wiederum ein Teilbetrag der dem Stückgut anhaftenden Bewegungsenergie absorbiert wird. Während der weiteren Abwärtsbewegung in dem von der vorderen Innenwand und der hinteren Innenwand gebildeten Bremsschacht berührt das fallende Stückgut noch ein oder mehrmals die hintere und vordere Innenwand, bevor es dann die untere Öffnung des Bremsschachtes passiert und im Bereich des Ausganges der Transportsäule auf die untere Transportebene gelangt. Bevorzugt ist auf der Innenfläche des Bodens der Transportsäule im Bereich des Ausganges ein elastischer Belag, ein Polster, angeordnet. Sofern am Ausgang der Transportsäule eine Ausgabe-/ Entnahmestation vorgesehen ist, wird nach einer Ausführungsvariante dieser Ausgang zugleich als eine Ausgabe-/ Entnahmestation gestaltet. Wenn jedoch am Ausgang der Transportsäule eine Übergabe an eine nachfolgende Transporteinheit vorgesehen ist, so reicht diese Transporteinheit bevorzugt bis in den Ausgang der Transportsäule hinein. Bei einer derartigen Variante ist auf dem Boden der Transportsäule kein elastischer Belag vorgesehen, sondern dieser Belag ist an der betreffenden Transporteinheit angeordnet, zum Beispiel ein elastisches Transportband.

Nach einer weiteren Ausführungsvariante, bei der die Übergabe des herabfallenden Stückgutes ebenfalls an eine nachfolgende Transporteinheit erfolgt, ist der Ausgang der Transportsäule speziell im Boden selbiger vorgesehen. Gegenüber den zuvor genannten Ausführungsvarianten enden die hintere und auch die vordere Innenwand dann entsprechend im Bereich des Bodens, ansonsten im Bereich der oberen Kante der Öffnung des Ausganges.

Die vordere Innenwand und/oder die hintere Innenwand bestehen nach einer weiteren Ausführungsvariante zumindest teilweise aus einem elastischen Material oder die elastischen Abschnitte sind auf der jeweiligen Innenfläche der Innenwände vorgesehen.
Für die Anordnung der Endabschnitte der Innenwände im Innenraum sind Befestigungsmittel vorgesehen, wobei bevorzugt zumindest jeweils eines dieser Befestigungsmittel verschieb- und arretierbar angeordnet ist.

Das obere Ende der hinteren Innenwand ist dabei an einem Befestigungsteil gehalten. Dieses Befestigungsteil ist an der Innenfläche der Decke angeordnet. Das Befestigungsteil ist dabei derart angeordnet, dass die quer zum Eingang der Transportsäule aufgehangene hintere Innenwand betreffend ihrem Abstand zum Eingang verschieb- und wahlweise arretierbar ist. An dem unteren Ende der hinteren Innenwand ist ein Pendelkörper befestigt. Die Masse dieses Pendelkörpers ist so gewählt, dass die hintere Innenwand bei Nicht-Berührung mit einem Stückgut stets straff vertikal hängt.

Die vordere Innenwand ist kopfseitig an einem Klemmteil befestigt ist, welches an der Innenwand der vorderen Säulenwand der Transportsäule unterhalb des Eingangs angeordnet ist.
Die vordere Innenwand ist nach einer Gestaltungsvariante in einen ersten, wesentlich längeren Abschnitt und einen zweiten, kürzeren Abschnitt unterteilt. Wie bereits weiter vorn erwähnt, verläuft die vordere Innenwand, hier also der erste längere Abschnitt, ausgehend vom im Klemmteil gehaltenen Anfang bis hinunter zur Oberkante des Ausganges der Transportsäule bogenförmig. Dabei ist der Bogen bezüglich der hinteren Innenwand konvex ausgebildet. Der Abstand zwischen der vorderen und der hinteren Innenwand hat am Ende der hinteren Innenwand, an welchen zudem der Pendelkörper angeordnet ist, die geringste Weite. Zudem ist bei dieser weiteren Gestaltungsvariante vorgesehen, dass im Übergangsbereich zwischen dem ersten, längeren Abschnitt und dem zweiten, kürzeren Abschnitt von der vorderen Säulenwand aus die vordere Innenwand von einem Umlenkteil hintergriffen wird und der zweite, kürzere Abschnitt im Wesentlichen horizontal geführt an einem ebenfalls an der Innenfläche der vorderen Säulenwand angeordneten Spannteil befestigt ist. Zudem ist hier der zweite, kürzere Abschnitt federelastisch ausgebildet. Hierdurch wird bewirkt, dass bei Auftreffen eines im Bremsschacht herabfallenden Stückgutes an der vorderen Innenwand eine zusätzliche und um ein weiteres gedämpfte Absorption der Bewegungsenergie dieses Stückgutes erfolgt.

Nach einer weiteren Ausführungsvariante ist vor dem Eingang der Transportsäule eine Kontrolleinheit angeordnet. Mit dieser Kontrolleinheit, die zumindest einen Sensor und einen Auswerfer umfasst, werden Stückgüter, die eine vorgeschriebene Größe oder Masse überschreiten, vor Erreichen des Einganges aus dem Transportweg ausgesondert werden.
Folgend ist eine Ausführungsform der Erfindung beispielhaft näher beschrieben. Es zeigen in schematischer Darstellung:
Figur 1 Die neue Vorrichtung in einer Seitenansicht, mit teils aufgetrennter Seitenwand;
Figur 1a von Figur 1 eine Draufsicht im Schnitt I-I;
Figur 2, 3 und 4 verschiedene Positionen eines im Bremsschacht der neuen Vorrichtung abwärts transportierten Stückgutes.

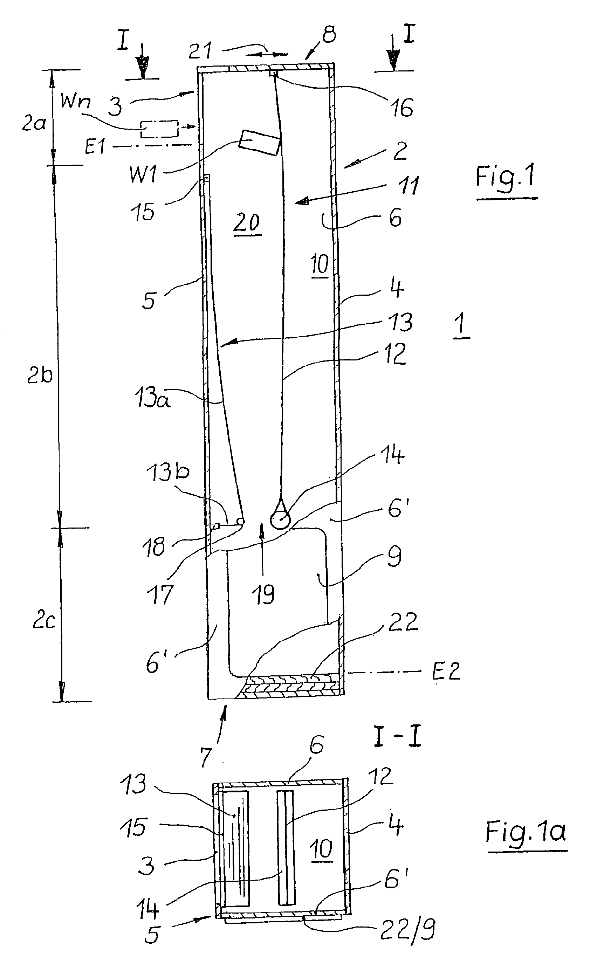

Die neue Vorrichtung zur Übergabe von Stückgütern ist in den Figuren mit der Bezugsziffer 1 versehen. In der Figur 1 ist eine der Seitenwände der Transportsäule 2 an der Vorrichtung 1, die Wand 6', teils entfernt, sodass der Blick in den Innenraum 10 gerichtet ist. Die Transportsäule 2 geht aus von einem Boden 7 mit aufwärtsragenden Säulenwänden, von denen in der Figur 1 die vordere Säulenwand 5, die hintere Säulenwand 4 und eine seitliche Säulenwand 6 vollständig zu sehen sind. Die Transportsäule 2 ist an ihrem oberen Ende mit einer Decke 8 versehen, sodass die Transportsäule 2 aus einem in sich stabilen Käfig besteht. Die Säulenwände 4, 5, 6, 6' und/oder die Decke 8 und der Boden 7 können dabei vollflächig sein oder jeweils aus einer gitterartig aufgebauten Fläche bestehen. Zur Erleichterung der Beschreibung ist die Transportsäule 2 gedanklich in einen Kopfbereich 2a, einen mittleren Bereich 2b und einen Fußbereich 2c gegliedert. Im Kopfbereich 2a ist in einer der Säulenwände, hier in der vorderen Säulenwand 5, eine Öffnung als Eingang 3 vorgesehen. Der Eingang 3 ist in seiner Dimension entsprechend dem größten zu fördernden Stückgut W1, ...Wn angepasst und reicht daher hier bis in die Decke 8 hinein. Unterhalb des Einganges 3 ist im Innenraum 10 der Transportsäule 2 eine abwärts gerichtete Bremseinheit 11 vorgesehen, mit welcher die Fallgeschwindigkeit des transportierten Stückgutes W1,...Wn derart gemindert werden kann, dass das von einer oberen Transportebene E1 durch die Vorrichtung 1 hindurch auf eine untere Transportebene E2 fallende Stückgut W1, ...Wn bei Erreichen von letzterer nicht deformiert oder anderweitig beschädigt ist. Die Bremseinheit 11 endet in einem im Fußbereich 2c vorgesehenen Ausgang 9 der Transportsäule 2. Der Ausgang 9 reicht bis hinunter zur Innenfläche des Bodens 7. Bei der hier gezeigten Ausführungsform ist zusätzlich, als weitere Alternative, auf besagter Innenfläche, also unten im Ausgang 9, noch ein elastischer Belag 22 vorgesehen. Diese wählbare Alternative ist insbesondere von Vorteil, wenn die Verpackung der transportierten Stückgüter oder die Stückgüter selbst aus einem leicht zerbrechlichen Material bestehen, sodass ein besonders behutsamer Transport vonnöten ist.

Im Speziellen bilden hier Teile der Bremseinheit 11 einen Bremsschacht 20, welcher zugleich der Förderschacht ist, durch welchen das Stückgut W1, ...Wn von der oberen Transportebene E1 auf die untere Transportebene E2 enorm gebremst fällt.

Die Bremseinheit 11 besteht im Wesentlichen aus einer flexiblen, hinteren Innenwand 12 und einer vorderen Innenwand 13, welche im Innenraum 10 der Transportsäule 2 zwischen deren seitlichen Säulenwänden 6, 6' im Wesentlichen vertikal ausgerichtet angeordnet sind. Die hintere Innenwand 12 reicht dabei von der Decke 8, also der Oberkante des Einganges 3 bis hinunter zur oberen Kante des Ausganges 9, während die vordere Innenwand 13 von der Unterkante des Einganges 3 bis ebenfalls zur oberen Kante des Ausganges 9 reicht.

Die hintere Innenwand 12 ist an der Innenfläche der Decke 8 mittels eines Befestigungsteiles 16 pendelnd aufgehangen. An der unteren Kante der hinteren Innenwand 12 ist zudem ein ein- oder mehrteiliger Pendelkörper 14 angeordnet. Durch die Masse des Pendelkörpers 14 hängt die hintere Innenwand 12 stets gestrafft herab.

Die vordere Innenwand 13 ist hier speziell aus einem flexiblen Material und in einen wesentlich längeren ersten Abschnitt 13a und einen relativ kurzen zweiten Abschnitt 13b unterteilt. Der Abschnitt 13a, der obere Abschnitt, ist an einem Klemmteil 15 innen an der vorderen Säulenwand 5 in etwa in Höhe der unteren Kante des Einganges 3 befestigt. Dieser erste Abschnitt 13a erstreckt sich im Wesentlichen vertikal abwärts mit einem bogenförmigen Auslauf zu seinem Ende hin und endet an einem im Wesentlichen waagerecht ausgerichteten Umlenkteil 17, von wo ab dann der zweite, kurze Abschnitt 13b, im Wesentlichen horizontal gerichtet, zur vorderen Säulenwand 5 reicht und an einem an der Innenfläche der vorderen Säulenwand 5 angeordneten Spannteil 18 festgelegt ist.

Zumindest der zu diesem Spannteil 18 hin gerichtete kurze Abschnitt 13b der vorderen Innenwand 13 ist federelastisch ausgebildet, sodass der mit diesem kurzen Abschnitt 13b, vorzugsweise materialeinheitlich, verbundene lange Abschnitt 13a der vorderen Innenwand bei Auftreffen eines Stückgutes W1, ...Wn noch um ein Weiteres elastischer ist, um möglichst viel der Bewegungsenergie des auftreffenden Stückgutes W1, ...Wn zu absorbieren.

Wie oft das jeweils herabfallende Stückgut W1, ...Wn die vordere 13 als auch die hintere 12 Seitenwand berühren muss, damit die anfänglich relativ hohe Transportgeschwindigkeit auf eine wesentlich geringe Transportgeschwindigkeit reduziert wird, ist unter anderem abhängig von der Größe und der Masse der zu transportierenden Stückgüter.

Damit die neue Vorrichtung 1 ein breites Einsatzgebiet hat, ist daher vorgesehen, dass das Befestigungsteil 16 für die pendelnd aufgehangene hintere Innenwand 12 der Bremseinheit 11 entlang der Decke 8 bezüglich des Abstandes zum Eingang 3 verschiebbar - markiert mit dem Doppelpfeil 21 - und wahlweise arretierbar angeordnet ist. Durch diese Einstellbarkeit kann unter anderem auch verhindert werden, dass Stückgüter W1, ...Wn, die eine vorgeschriebene Größe überschreiten, nicht abwärts beförderbar sind, um eine Havarie innerhalb der abwärts gerichteten Transportstrecke zu vermeiden.

Durch die Verschiebbarkeit der hinteren Innenwand 12 bezüglich der vorderen Säulenwand 5 kann einerseits die Weite des Bremsschachtes 20 als auch die Weite von dessen unterer Öffnung 19 eingestellt werden.

In der Darstellung nach Figur 1 fällt ein Stückgut W1 von der oberen Transportebene E1 durch den Eingang 3 hindurch in den Bremsschacht 20 der Transportsäule 2, während bereits ein weiteres Stückgut Wn folgt.

Die in der Figur 1 in Seitenansicht mit teilweisem Schnitt gezeigte Vorrichtung 1 ist in der Figur 1a gemäß Schnitt entlang der Linie I-I in Draufsicht dargestellt; gleiche Bauteile haben hier gleiche Bezugsziffern. Auch hier fällt der Blick in den Innenraum 10 der Transportsäule 2. Dieser Darstellung ist zu entnehmen, dass die vordere Innenwand 13 und die hintere Innenwand 12 der Bremseinheit 11 in ihrer seitlichen Ausdehnung nur so weit gehen, dass zwischen der seitlichen Säulenwand 6 und 6' und den beiden Innenwänden 12, 13 jeweils noch ein Spalt vorhanden ist, sodass die bei Auftreffen eines Stückgutes auf selbige, zumindest in Teilabschnitten bewegten Innenwände 12, 13 seitlich keine Reibung erfahren, was einerseits nachteilig für die Lebensdauer dieser Bauteile wäre und zum anderen einen erhöhten Aufwand bei der Montage oder Demontage dieser Bauteile erfordern würde.

In den Figuren 1 bis 4 ist in nacheinander folgenden Zeitintervallen eine jeweilige Position des abwärts transportierten Stückgutes W1 gezeigt. Wie aus diesen Darstellungen klar ersichtlich ist, erfolgt ein wechselseitiges Auftreffen des transportierten Stückgutes W1 an der hinteren Innenwand 12 und der vorderen Innenwand 13, wobei, wie eingangs schon erwähnt, bei jedem Auftreffen an der betreffenden Innenwand 12, 13 Bewegungsenergie schonend absorbiert wird, sodass bei Erreichen und Passieren der Öffnung 19 des Bremsschachtes 20, also im Endabschnitt des Abwärts-Transportierens die Transportgeschwindigkeit und damit die dem transportierten Stückgut W1 zu diesem Zeitpunkt noch immanente Bewegungsenergie gegenüber der bei seinem Eintritt in die Transportsäule 2 wesentlich verringert wurde, wodurch ein schonendes und sanftes Auftreffen auf die untere Transportebene E2 gewährleistet ist. Vorsorglich ist in Höhe der unteren Transportebene E2 auf der Innenfläche des Bodens 7 des Transportschachtes 2 ein elastischer Belag 22 als Polster vorgesehen.

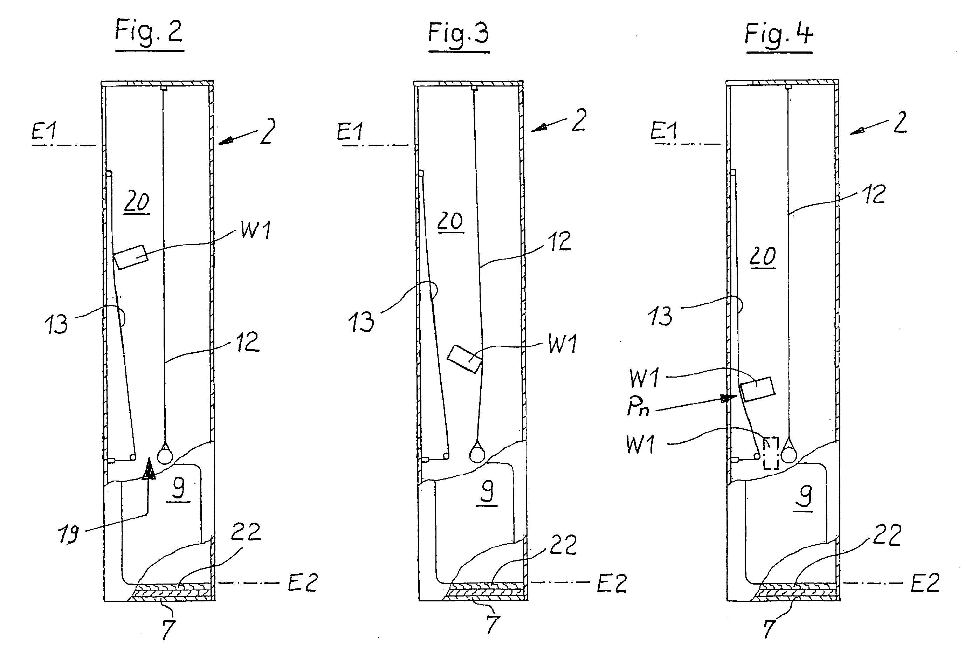

In der Darstellung nach Figur 1 ist das Stückgut W1 bereits ein erstes Mal von der hinteren Innenwand 12 der Bremseinheit 11 gebremst und abgelenkt worden, sodass das Stückgut W1 jetzt - Figur 2 - an der vorderen Innenwand 13 der Bremseinheit 11 auftrifft, wobei es W1 ein zweites mal in seiner Transportgeschwindigkeit abgebremst wird. Bei der Darstellung in Figur 3 trifft das Stückgut W1 ein weiteres Mal an die hintere Innenwand 12 und wird hierbei wiederum in seiner Transportgeschwindigkeit gebremst, Bewegungsenergie wird absorbiert. In der Position Pn - Figur 4 - trifft das Stückgut W1 ein letztes Mal an die vordere Innenwand 13 und fällt dann von dort aus durch die variable Öffnung 19 hindurch in den Ausgang 9 der Transportsäule 2.

### BEZUGSZEICHENLISTE

- 1: Vorrichtung
- 2: Transportsäule
- 2a: Kopfbereich
- 2b: mittlerer Bereich
- 2c: Fußbereich
- 3: Eingang
- 4: hintere Säulenwand
- 5: vordere Säulenwand
- 6, 6': seitliche Säulenwände
- 7: Boden
- 8: Decke
- 9: Ausgang
- 10: Innenraum
- 11: Bremseinheit
- 12: hintere Innenwand
- 13: vordere Innenwand
- 13a: oberer Abschnitt von Pos. 13
- 13b: unterer Abschnitt von Pos. 13 (federelastisch)
- 14: Pendelkörper
- 15: Klemmteil
- 16: Befestigungsteil
- 17: Umlenkteil / (Anlage)
- 18: Spannteil
- 19: Öffnung
- 20: Bremsschacht
- 21: Pfeil
- 22: elastischer Belag (Polster)
- E1: obere Transportebene
- E2: untere Transportebene
- Pn: Position im Transportweg
- W1, ... Wn: Stückgut

## Patentansprüche

1. Vorrichtung für die Übergabe von Stückgütern (W1, ...Wn), umfassend eine Transportsäule (2), durch deren (2) Innenraum (10) hindurch die Stückgüter (W1, ...Wn) von einer ersten, oberen Transportebene (E1) zu einer zweiten, unteren Transportebene (E2) hin abwärts transportiert werden,
***dadurch gekennzeichnet, dass***
im Innenraum (10) zwischen einem im Kopfbereich (2a) der Transportsäule (2) vorgesehenen Eingang (3) und einem im Fußbereich (2c) der Transportsäule (2) angeordnetem Ausgang (9) eine Bremseinheit (11) vorgesehen ist, mit welcher (11) die Transportgeschwindigkeit des zumindest mittels Schwerkraft fallenden Stückgutes (W1, ...Wn) wesentlich gesenkt wird, für ein schonendes Abwärts-Transportieren.

2. Vorrichtung nach Anspruch 1,
***dadurch gekennzeichnet, dass***
zumindest Teile der Bremseinheit (11) einen Bremsschacht (20) bilden, wobei selbiger (20) zugleich der Transportschacht für den Abwärts-Transport der Stückgüter (W1, ...Wn) ist.

3. Vorrichtung nach Anspruch 1 oder 2,
***dadurch gekennzeichnet, dass***
die Bremseinheit (11) wenigstens eine vordere, im Wesentlichen vertikal gerichtete und zum Ausgang (9) hin geführte vordere Innenwand (13) und eine im Wesentlichen vertikal angeordnete hintere Innenwand (12) aufweist.

4. Vorrichtung nach Anspruch 3,
***dadurch gekennzeichnet, dass***
die hintere Innenwand (12) mit einem ihrer Enden im Kopfbereich (2a) des Innenraumes (10) schwenkbeweglich befestigt ist und an ihrem anderen Ende ein Pendelkörper (14) vorgesehen ist.

5. Vorrichtung nach Anspruch 3 oder 4,
***dadurch gekennzeichnet, dass***
die hintere Innenwand (12) und/oder die vordere Innenwand (13) aus einem flexiblen Material bestehen.

6. Vorrichtung nach Anspruch 3, 4 oder 5,
***dadurch gekennzeichnet, dass***
die vordere Innenwand (13) und/oder die hintere Innenwand (12) zumindest teilweise aus einem elastischen Material bestehen.

7. Vorrichtung nach Anspruch 6,
***dadurch gekennzeichnet, dass***
die elastischen Abschnitte auf der jeweiligen Innenfläche der Innenwände (12, 13) vorgesehen sind.

8. Vorrichtung nach Anspruch 3, 4, 5, 6 oder 7,
***dadurch gekennzeichnet, dass***
zumindest jeweils eines der Befestigungsmittel für die Endabschnitte der Innenwände (12, 13) verschieb- und arretierbar angeordnet ist.

9. Vorrichtung nach Anspruch 4, 5, 6, 7 oder 8,
***dadurch gekennzeichnet, dass***
die zwischen dem jeweils unteren Ende der Innenwände (12, 13) gebildete Öffnung (19) in ihrer Weite einstellbar ist.

10. Vorrichtung nach Anspruch 3, 4, 5, 6, 7, 8 oder 9,
***dadurch gekennzeichnet, dass***
die vordere Innenwand (13) unterhalb des Einganges (3) der Transportsäule (2) von einem Umlenkteil (17) hintergriffen ist, sodass selbige (13) in einen ersten, wesentlich längeren Abschnitt (13a) und in einen kürzeren Abschnitt (13b) unterteilt ist.

11. Vorrichtung nach Anspruch 3, 4, 5, 6, 7, 8, 9 oder 10,
***dadurch gekennzeichnet, dass***
das freie Ende des kurzen Abschnittes (13b) der flexiblen vorderen Innenwand (13) an einem Spannteil (18) befestigt ist, welches an der Innenfläche der vorderen Säulenwand (5) der Transportsäule (2) angeordnet ist.

12. Vorrichtung nach Anspruch 11,
***dadurch gekennzeichnet, dass***
die Ortslage des Umlenkteiles (17) variierbar ist, sodass die Spannung der flexiblen vorderen Innenwand (13) wahlweise veränderbar ist.

13. Vorrichtung nach Anspruch 10, 11 oder 12,
***dadurch gekennzeichnet, dass***
der kurze Abschnitt (13) im Wesentlichen horizontal ausgerichtet ist.
